# EUROPÄISCHE PATENTSCHRIFT

(11) **EP 1 151 265 B1**
(45) Veröffentlichungstag und Bekanntmachung des Hinweises auf die Patenterteilung: **14.07.2004**
(21) Anmeldenummer: 99958067.3
(22) Anmeldetag: 18.11.1999
(51) Int. Cl.: G01M 3/20

(54) **TESTLECK**
TEST LEAK UNIT
FUITE D'ESSAI

(30) Priorität: 19.02.1999 DE 19906941
(43) Veröffentlichungstag der Anmeldung: 07.11.2001
(73) Patentinhaber: Inficon GmbH, 50968 Köln (DE)
(72) Erfinder: WIDT, Rudi, D-50969 Köln (DE); FFLOSBACH, Rudolf, D-51688 Wipperfürth (DE)
(74) Vertreter: Leineweber, Jürgen, Dipl.-Phys.
(86) Internationale Anmeldenummer: PCT/EP1999/008859
(87) Internationale Veröffentlichungsnummer: WO 2000/049380

(56) Entgegenhaltungen:
- US-A- 3 129 729
- US-A- 3 209 579

## Beschreibung

Die Erfindung bezieht sich auf ein Testleck mit einem Helium-Tesgasvorrat, und einem leckratenbestimmenden Element.

Bei der Dichtheitsprüfung von Hohlkörpern hat sich die Vakuum-Testgas-Lecksuche durchgesetzt. Die Wandung des Hohlkörpers wird einem Differendruck ausgesetzt, der durch Evakuierung des Hohlkörpers oder seiner Umgebung erzeugt wird. Auf der Seite mit dem höheren Druck eingelassenes Testgas, im allgemeinen Helium, dringt durch eventuell vorhandene Lecks hindurch und wird von einem an die Seite mit dem niedrigeren Druck angeschlossenen Testgasdetektor, z.B. ein Massenspektrometer, registriert.

Testlecks der eingangs erwähnten Art sind zum Beispiel aus den DE-A-Schriften 32 43 752 und 36 13 694 bekannt. Sie liefern eine Leckage mit bekannten Eigenschaften und dienen der Kalibrierung von Lecksuchgeräten. Dazu werden sie über Anschlussleitungen mit dem Lecksuchgerät verbunden, in dem sich ein Testgasdetektor befindet. Häufig sind sie in das Lecksuchgerät eingebaut. Eine andere Möglichkeit besteht darin, die Funktion des Lecksuchgerätes dadurch zu überprüfen, dass das Testleck mit seiner Öffnung, aus der Testgas über ein leckratenbestimmendes Element ausströmt, in den Bereich des Einlasses des Lecksuchgerätes gehalten wird. Das zum Testgasdetektor gelangende Testgas erzeugt die gewünschten Testsignale.

Aus der WO 98/16809 sind ein Verfahren und eine Vorrichtung zur Prüfung der Dichtheit von Verpackungen bekannt. Innerhalb der geschlossenen Verpackung befindet sich Testgas (vorzugsweise Helium, auch Stickstoff, Argon, Kohlendyoxid, Halogengase oder dergleichen). Innerhalb einer aus Folien bestehenden Testkammer erfolgt die Dichtheitsprüfung. Bei einem Verfahren und einer Vorrichtung dieser Art wurde bereits ein die Sicherheit der Dichtheitsprüfung verbessernder Kontrollschritt vorgeschlagen. Dieser Vorschlag besteht darin, dass die Wandung eines Prüflings mit einem Leck versehen wird und dass mit diesem Prüfling ein Lecksuchvorgang durchgeführt wird. Als Testleck wird also einer der Prüflinge selbst verwendet. Die Überprüfung eines Lecksuchgerätes mit einem "Quasi-Testleck" dieser Art ist nur qualitativ möglich. Die Größe des durch Einstechen erzeugten Lecks ist unbekannt. Dieses gilt auch für die im Prüfling enthaltene Testgaskonzentration, die sich vor allem dann verändert hat, wenn der als "Quasi-Testleck" ausgesuchte Prüfling bereits vorher leck war.

US-A-3 129 729 offenbart einen Halogen-Testleck, wobei im Vorratsgefäß ein Überdruck herrscht. Ein leckraten-bestimmende Element ist im Vorratsgefäß geschraubt, und ein Zuführkanal zum Nachfüllen von Testgas befindet sich im Vorratsgefäß.
US-A-5 457 630 offenbart einen Testleck, wobei sich im Vorratsgefäß eine Flüssigkeit befindet, deren Dampf das Testgas enthalt. Nach Entfernung des Verschlussstückes des Vorratsgefäßes kann neue Flüssigkeit nachgefüllt werden.

Der vorliegenden Erfindung liegt die Aufgabe zugrunde, ein einfaches, robustes und leicht nachfüllbares Testleck zu schaffen, das auch für Verpackungs-Lecksucher geeignet ist.

Erfindungsgemäß wird diese Aufgabe bei einem Testleck der eingangs erwähnten Art dadurch gelöst, dass sich der Helium-Testgasvorrat im wesentlichen unter Atmosphärendruck in einem wiederverschließbaren Vorratsgefäß mit einem Verschlussstück befindet, dass bei verschlossenem Vorratsgefäß zwischen Verschlussstück und Vorratsgefäß testgasdichte Dichtmittel vorgesehen sind, dass das leckratenbestimmende Element Bestandteil des Verschlussstückes ist und dass das Verschlusstück mit Ein- und Ausströmkanälen zum Nachfüllen von frischem Testgas ausgerüstet ist.

Dadurch, dass im Testgasvorratsgefäß Druck von etwa Atmosphärendruck herrscht, strömt Testgas durch das leckratenbestimmende Element im wesentlichen nur dann aus, wenn sich das Testleck in einer Vakuumkammer, d.h. in einer Lecksuchkammer befindet, in der Prüflinge der Vakuumlecksuche unterworfen werden. Ohne wesentliche Veränderung der Testgaskonzentration im Vorratsgefäß können viele Testzyklen (bei einem Vorratsgefäß von 0,25 Litern und Helium als Testgas ca. 10.000) durchgeführt werden. Die Tatsache, dass der Fülldruck des Testlecks dem umgebenden Atmosphärendruck entspricht, hat den weiteren Vorteil, dass die Nachfüllung in einfacher Weise mit Hilfe einer Sprühpistole durchgeführt werden kann. Eine sonst notwendige Gasschleuse ist nicht mehr erforderlich. Das Einsprühen des Testgases in das Vorratsgefäß hat die Wirkung, dass die bisherige Füllung ausströmt. Insgesamt lassen sich mit dem mit dem erfindungsgemäßen Testleck relativ große Leckraten dauerhaft erreichen. Bei dem sonst üblichen, weit über dem Atmosphärendruck liegenden Innendruck bekannter Testlecks führt die Abnahme des Druckes relativ schnell zu einer Leckratenveränderung.

Die Anpassung der Leckrate des erfindungsgemäßen Testlecks an den kundenspezifischen Prozess kann in einfacher Weise dadurch erfolgen, dass ein Verschlussstück mit der gewünschten Leckrate ausgewählt wird. Ändern sich die kundenspezifischen Anforderungen, kann dieses Verschlussstück schnell und einfach durch ein Verschlussstück mit einer anderen Leckrate ausgetauscht werden.

Wesentlich ist, dass beim Einsatz des erfindungsgemäßen Testlecks im Vakuum einer Lecksuchkammer Testgas nur durch das leckratenbestimmende Element ausströmt. Jede weitere Dichtung, sei es die Dichtung zwischen dem Verschlussstück und dem Vorratsgefäß oder eine Dichtung zwischen dem leckratenbestimmenden Element und dem Verschlussstück, muss testgasdicht sein. Bei der Verwendung von Helium als Testgas müssen PU-Dichtungen verwendet werden, vorzugsweise "Platilon" (Firma Atochem, Bonn).

Als Verschluss zwischen Verschlussstück und Gefäß dient zweckmäßig ein Schraubverschluss. Gegenüber anderen Verschlüssen (z.B. Bayonettverschluss) lässt sich die gewünschte Testgasdichtheit besonders gut erreichen.

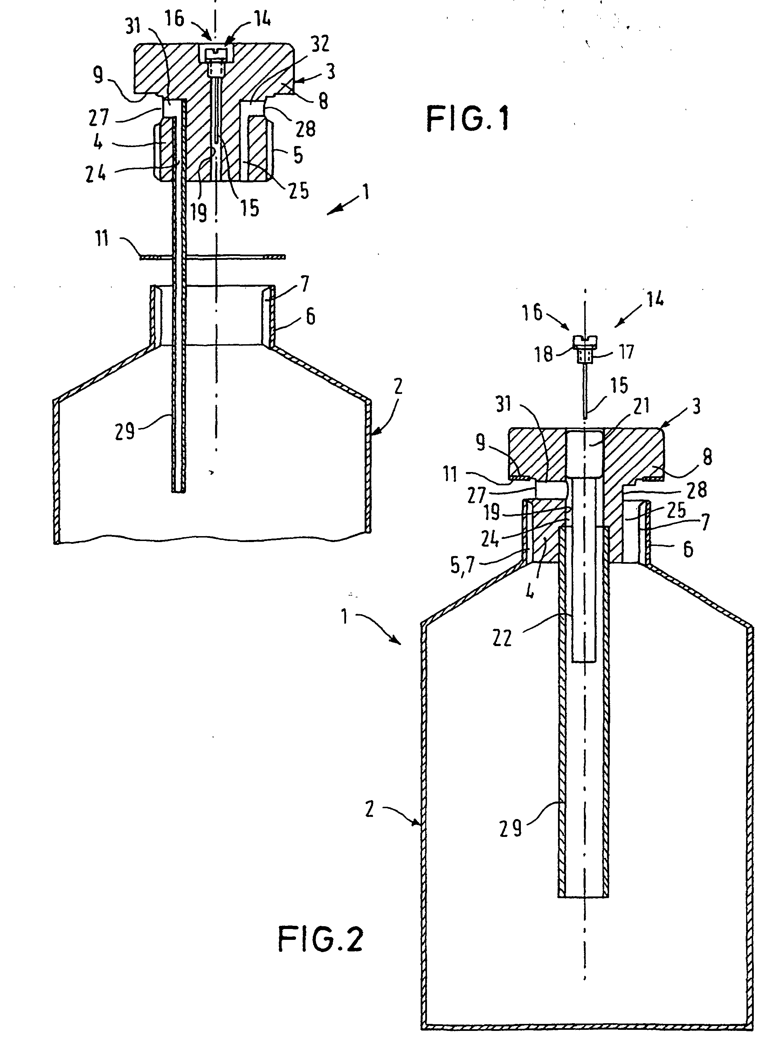

Weitere Vorteile und Einzelheiten der Erfindung sollen anhand von in den Figuren 1 und 2 dargestellten Ausführungsbeispielen erläutert werden.

Die Figuren 1 und 2 zeigen jeweils ein Testleck 1 mit einem Vorratsgefäß 2 und einem Verschlussstück 3. Das Verschlussstück 3 weist einen Abschnitt 4 mit einem Außengewinde 5 auf. Diesem Außengewinde 5 ist im Hals 6 des Vorratsgefäßes 2 ein Innengewinde 7 zugeordnet.

Ein weiterer Abschnitt 8 des Verschlussstückes 3 hat einen gegenüber dem Abschnitt 4 vergrößerten Durchmesser. Sein Rand ist mit einer dem Vorratsgefäß 2 zugewandten Aussparung 9 versehen, die einen Dichtring 11 aufnimmt. Bei vollständig in den Hals 6 des Vorratsgefäßes 2 eingeschraubtem Verschlussstück 3 liegt die Oberkante des Halses 6 dem Dichtring 11 an und sorgt für die gewünschte Dichtheit des Vorratsgefäßes 2.

Das leckratenbestimmende Element ist in beiden Figuren mit 14 bezeichnet. Es besteht aus einer Quarzkapillaren 15, die zweckmäßig kunststoffummantelt ist. Sie ist in einer nach Art einer Vergaserdüse ausgebildeten Halterung 16 mit Gewinde 17 und Dichtring 18 befestigt (Figur 2). Elemente dieser Art sind aus der WO 95/21373 an sich bekannt.

Beim Ausführungsbeispiel nach Figur 1 ist die Halterung 16 unmittelbar in eine Axialbohrung 19 im Verschlussstück 3 derart eingeschraubt, dass die Kapillare 15 diese Bohrung 19 durchsetzt und mit dem Innenraum des Vorratsgefäßes 2 in Verbindung steht. Beim Ausführungsbeispiel nach Figur 2 ist ein Einsatz 21 vorgesehen, der in die Axialbohrung 19 testgasdicht eingeklebt ist. In den Einsatz 21 ist die Halterung 16 einschraubbar. Bestandteil des Einsatzes 21 ist ein Schutzrohr 22, das die Kapillare 15 in eingebautem Zustand umgibt.

Das Verschlussstück 3 ist schließlich noch mit Kanälen 24, 25 versehen, die der Zuführung von frischem Testgas und dem Abströmen des noch im Vorratsgefäß 2 befindlichen Gasgemisches dienen. Sie weisen äußere Mündungen 27 bzw. 28 auf, die sich seitlich im Abschnitt 4 des Verschlussstückes 3 befinden und derart angeordnet sind, dass sie bei teilweise aus dem Vorratsgefäß 2 herausgeschraubtem Verschlussstück 3 zugänglich sind (Figur 2). An die innere Mündung des Testgas-Zuführungskanals 24 schließt sich ein Rohrabschnitt 29 an, der sich bis in den unteren Teil des Vorratsgefäßes 2 erstreckt. Dadurch ist sichergestellt, dass das zugeführte, frische Testgas das noch im Vorratsgefäß 2 befindliche Gasgemisch durch den Ausströmkanal 25 hinausdrückt. Die Dose wird zweckmäßig beim Befüllen auf den Kopf gestellt, so dass das einströmende leichtere Helium das alte Gasgemisch bzw. Luft nach unten herausdrückt.

Beim Ausführungsbeispiel nach Figur 1 werden die Einund Ausströmungskanäle 24, 25 von Axialbohrungen gebildet. Sie münden in Radialbohrungen 31, 32, die die äußeren Mündungen bilden.

Beim Ausführungsbeispiel nach Figur 2 dient die Bohrung 19, die nach außen hin vom eingeklebten Einsatz 21 dicht verschlossen ist, auch als Einströmkanal 24 für die Zuführung von frischem Testgas. Der Ausströmungskanal ist dadurch gebildet, dass das Verschlussstück 3 im Bereich seines Abschnittes 4 seitlich abgeflacht ist.

## Patentansprüche

1. Testleck (1) mit einem Helium-Testgasvorrat und einem leckratenbestimmenden Element (14), **dadurch gekennzeichnet, dass** sich der Testgasvorrat im wesentlichen unter Atmosphärendruck in einem wiederverschließbaren Vorratsgefäß (2) mit einem Verschlussstück (3) befindet, dass bei verschlossenem Vorratsgefäß (2) zwischen Verschlussstück (3) und Vorratsgefäß (2) testgasdichte Dichtmittel (11) vorgesehen sind, dass das leckratenbestimmende Element (14) Bestandteil des Verschlussstückes (3) ist und dass das Verschlussstück (3) mit Ein- und Ausströmkanälen (24, 25) zum Nachfüllen von frischem Testgas ausgerüstet ist.

2. Testleck nach Anspruch 1, **dadurch gekennzeichnet, dass** der Verschluss zwischen Gefäß (2) und Verschlussstück (3) als Schraubverschluss (5,7) ausgebildet ist.

3. Testleck nach Anspruch 2, **dadurch gekennzeichnet, dass** die äußeren Mündungen (27, 28) der Ein- und Ausströmkanäle (24, 25) derart seitlich am Verschlußstück (3) angeordnet sind, dass sie bei verschlossenem Vorratsgefäß (2) ebenfalls verschlossen sind.

4. Testleck nach Anspruch 2 oder 3, **dadurch gekennzeichnet, dass** sich an die innere Mündung des Testgas-Zuführungskanals (24) ein Rohrabschnitt (29) anschließt, der sich bis in den unteren Teil des Vorratsgefäßes (2) erstreckt.

5. Testleck nach einem der vorhergehenden Ansprüche, **dadurch gekennzeichnet, dass** das Verschlussstück (3) mit einer Bohrung (19) ausgerüstet ist, in der sich das leckratenbestimmende Element (14) befindet.

6. Testleck nach einem der vorhergehenden Ansprüche, **dadurch gekennzeichnet, dass** das leckratenbestimmende Element (14) aus einer vorzugsweise kunststoffummantelten Quarzkapillaren (15) besteht, die in einer nach Art einer Vergaserdüse ausgebildeten Halterung (16,17,18) befestigt ist.

7. Testleck nach Anspruch 5 und Anspruch 7, **dadurch gekennzeichnet, dass** die Halterung (16) in die Bohrung (19) eingeschraubt ist.

8. Testleck nach Anspruch 5 und 6, **dadurch gekennzeichnet, dass** sich in der Bohrung (19) ein Einsatz (21) befindet, in den das Testleck (14) einschraubbar ist.

9. Testleck nach einem der Ansprüche 6, 7, 8, **dadurch gekennzeichnet, dass** ein Schutzrohr (19, 22) für die Quarzkapillare (15) des leckratenbestimmenden Elements (14) vorgesehen ist.

10. Testleck nach einem der vorhergehenden Ansprüche, **dadurch gekennzeichnet, dass** das Verschlussstück (3) mit einer dem Vorratsgefäß (2) zugewandten Aussparung (9) für einen Dichtring (11) ausgerüstet ist und dass dieser Dichtring (11) der Oberkante eines Halses (6) des Vorratsgefäßes (2) bei geschlossenem Gefäß (2) aufliegt.

## Claims

1. Leakage test unit (1) with a helium test gas supply and a leakage rate-determining element (14), **characterised in that** the test gas supply is located substantially under atmospheric pressure in a reclosable reservoir (2) with a closing piece (3), that test gas-proof sealing means (11) are provided between the closing piece (3) and the reservoir (2) when the reservoir (2) is closed, that the leakage rate-determining element (14) is a component part of the closing piece (3), and that the closing piece (3) is equipped with inflow and outflow channels (24, 25) for refilling with fresh test gas.

2. Leakage test unit according to Claim 1, **characterised in that** the closure between the reservoir (2) and the closing piece (3) is formed as a screwed closure (5, 7).

3. Leakage test unit according to Claim 2, **characterised in that** the outer openings (27, 28) of the inflow and outflow channels (24, 25) are arranged at the sides of the closing piece (3) such that they are also closed when the reservoir (2) is closed.

4. Leakage test unit according to Claim 2 or 3, **characterised in that** the inner opening of the test gas supply channel (24, 25) is adjoined by a tube section (29) which extends into the bottom part of the reservoir (2).

5. Leakage test unit according to any one of the preceding Claims, **characterised in that** the closing piece (3) is equipped with a bore (19) in which the leakage rate-determining element (14) is located.

6. Leakage test unit according to any one of the preceding Claims, **characterised in that** the leakage rate-determining element (14) consists of a preferably plastics-jacketed quartz capillary (15) which is fixed in a holder (16, 17, 18) formed like a spray nozzle.

7. Leakage test unit according to Claim 5 and Claim 7, **characterised in that** the holder (16) is screwed into the bore (19).

8. Leakage test unit according to Claim 5 and Claim 6, **characterised in that** an insert (21) is located in the bore (19), into which insert the leakage test unit (14) can be screwed.

9. Leakage test unit according to any one of Claims 6, 7, 8, **characterised in that** a protective tube (19, 22) is provided for the quartz capillary (15) of the leakage-rate determining element (14).

10. Leakage test unit according to any one of the preceding Claims, **characterised in that** the closing piece (3) is equipped with a recess (9) facing the reservoir (2) for a sealing ring (11), and that this sealing ring (11) lies on the top rim of a neck (6) of the reservoir (2) when the reservoir (2) is closed.

## Revendications

1. Fuite étalon (1) comprenant une réserve d'hélium servant de gaz d'essai et un élément (14) déterminant le débit de fuite, **caractérisée en ce que** la réserve de gaz d'essai se trouve essentiellement sous pression atmosphérique dans un réservoir (2) refermable avec un obturateur (3), **en ce que** des joints d'étanchéité (11) étanches au gaz d'essai sont prévus entre l'obturateur (3) et le réservoir (2) lorsque ce dernier est fermé, **en ce que** l'élément (14) déterminant le débit de fuite est un composant de l'obturateur (3) et **en ce que** cet obturateur (3) est équipé de canaux d'admission et d'évacuation (24, 25) pour le remplissage ultérieur de gaz d'essai frais.

2. Fuite étalon selon la revendication 1, **caractérisée en ce que** la fermeture entre le réservoir (2) et l'obturateur (3) est conçue en tant que bouchon fileté (5, 7).

3. Fuite étalon selon la revendication 2, **caractérisée en ce que** les orifices extérieurs (27, 28) des canaux d'admission et d'évacuation (24, 25) sont disposés latéralement sur l'obturateur (3) de manière à être également fermés si le réservoir est fermé (2).

4. Fuite étalon selon la revendication 2 ou 3, **caractérisée en ce qu'**une section de tuyau (29) qui s'étend jusqu'à la partie inférieure du réservoir (2) se raccorde à l'orifice intérieur du canal d'alimentation de gaz d'essai (24).

5. Fuite étalon selon l'une quelconque des revendications précédentes, **caractérisée en ce que** l'obturateur (3) est équipé d'un alésage (19) dans lequel se trouve l'élément (14) déterminant le débit de fuite.

6. Fuite étalon selon l'une quelconque des revendications précédentes, **caractérisée en ce que** l'élément (14) déterminant le débit de fuite se compose d'un tube capillaire en quartz (14) de préférence enrobé de matière synthétique et fixé dans une fixation (16, 17, 18) conçue sous la forme d'un gicleur d'alimentation.

7. Fuite étalon selon la revendication 5 et la revendication 7, **caractérisée en ce que** la fixation (16) est vissée dans l'alésage (19).

8. Fuite étalon selon la revendication 5 et 6, **caractérisée en ce qu'**un insert (21) dans lequel peut être vissée la fuite étalon (44) se trouve dans l'alésage (19).

9. Fuite étalon selon l'une des revendications 6, 7, 8, **caractérisée en ce qu'**un tube protecteur (19, 22) est prévu pour le tube capillaire en quartz (15) de l'élément (14) déterminant le débit de fuite.

10. Fuite étalon selon l'une quelconque des revendications précédentes, **caractérisée en ce que** l'obturateur (3) est doté d'un creux (9) tourné vers le réservoir (2) pour une bague d'étanchéité (11) et **en ce que** cette bague d'étanchéité (11) s'appuie contre l'arête supérieure d'un col (6) du réservoir (2) lorsque ce dernier est fermé.
